# EUROPÄISCHE PATENTSCHRIFT

(11) **EP 3 648 985 B1**
(45) Veröffentlichungstag und Bekanntmachung des Hinweises auf die Patenterteilung: **31.07.2024**
(21) Anmeldenummer: 18737827.8
(22) Anmeldetag: 26.06.2018
(51) Int. Cl.: B60B 7/04, B60B 7/06, B60B 7/14, B60B 7/08

(54) **RADABDECKUNG FÜR EIN RAD EINES FAHRZEUGS**
WHEEL COVER FOR A WHEEL OF A VEHICLE
GARDE-BOUE POUR UNE ROUE DE VÉHICULE

(30) Priorität: 07.07.2017 DE 102017211697
(43) Veröffentlichungstag der Anmeldung: 13.05.2020
(73) Patentinhaber: Bayerische Motoren Werke Aktiengesellschaft, 80809 München (DE)
(72) Erfinder: KRAUSE, Andreas, 82131 Stockdorf (DE); GROTH, Kristian, 81475 München (DE); BROOME, Timothy, 81675 Muenchen (DE); PREYSS, Georg, 80796 München (DE)
(86) Internationale Anmeldenummer: PCT/EP2018/067088
(87) Internationale Veröffentlichungsnummer: WO 2019/007752

(56) Entgegenhaltungen:
- DE-A1- 102011 114 664
- JP-U- H0 685 101
- US-A1- 2003 047 987
- US-A1- 2012 133 197

## Beschreibung

Die Erfindung betrifft ein Rad eines Fahrzeuges nach dem Oberbegriff des Anspruchs 1. Zum Stand der Technik wird beispielshalber auf die US 2012 / 0 133 197 A1, DE 10 2011 107 064 A1 und die US 2011 0 101 766 A1 verwiesen.

An Räder von Fahrzeugen, insbesondere an solche von Personenkraftwagen, werden die unterschiedlichsten Anforderungen gestellt. Neben einer ausreichenden Festigkeit bei geringem Gewicht sollen die Räder einem guten Luftwiderstandsbeiwert des Fahrzeuges förderlich sein und sich durch ein gefälliges optisches Erscheinungsbild auszeichnen. Dazu zählt auch die Tatsache, dass der sichtbare Außenbereich der Räder nur in geringem Maße durch den Abrieb der an der Radinnenseite (also dem Fahrzeug zugewandten Seite) der Räder vorgesehenen Radbremse verschmutzt wird. Um insbesondere letzteres zu gewährleisten, ist es bekannt, die Freiräume zwischen sämtlichen Speichen eines Rads mittels eines einzigen scheibenförmigen Abdeckelements, welches an der Innenseite des Rads vorgesehen ist, gegenüber der zusammen mit dem Rad rotierenden Bremsscheibe der Radbremse abzudecken. Daneben sind auch Abdeckelemente bekannt, welche Speichenzwischenräume einzeln abdecken.

Häufig werden solche Abdeckelemente mit dem Rad zur Sicherstellung einer festen Verbindung an den Rädern des Fahrzeuges verklebt oder fest verschraubt. Ein Auswechseln bzw. Demontieren der Abdeckelemente, beispielsweise bei Beschädigung oder zur Variabilität des Designs, ist dann jedoch nur schwer möglich.

Dabei entsteht ein Zielkonflikt zwischen einer stabilen und verlustsicheren Verbindung des Abdeckelements mit dem Rad und einer einfachen Demontage des Abdeckelements.

In der DE 10 2011 107 064 A1 wird beispielsweise ein zweiteiliges Abdeckelement aufgezeigt, welches einen Einsatzkörper und einen Schnappring bzw. ein Schnappelement umfasst, die dazu konfiguriert sind ineinander einzurasten. Wenn der Schnappring und der Einsatzkörper ineinander gepresst werden, schaffen Schnappverbindungselemente eine festgehaltene Schnappverbindung.

Ebenfalls ist aus der US 2011 0 101 766 A1 ein zweiteiliges Element zur Anordnung in einem Speichenzwischenraum aufgezeigt.

Ferner offenbart die US 2012 / 0 133 197 A1 ein Rad eines Fahrzeuges gemäß dem Oberbegriff des Anspruchs 1. Zudem ist aus der DE 10 2011 114 664 A1 eine Vorrichtung zur aerodynamischen Optimierung eines Fahrzeugrads als bekannt zu entnehmen. Des Weiteren offenbart die US 2003 / 0 047 987 A1 ein verziertes Leichtmetallrad. Außerdem ist aus der JP H06 85101 U eine Radabdeckung als bekannt zu entnehmen.

Es ist Aufgabe der Erfindung, ein Rad eines Fahrzeuges mit einem Abdeckelement aufzuzeigen, welches verlustsicher am Rad angebunden ist und eine einfache Montage und Demontage gewährleistet.

Die Lösung der Aufgabe ergibt sich durch ein Rad eines Fahrzeuges mit den Merkmalen des Anspruchs 1. Vorteilhafte Aus- und Weiterbildungen sind Inhalt der Unteransprüche.

Es wird ein Rad eines Fahrzeuges, insbesondere eines Personenkraftwagens vorgeschlagen, welches eine Felge und einen Nabenabschnitt bzw. einen Flanschbereich (auch als Radflansch bezeichnet) sowie zumindest zwei diesen Nabenabschnitt bzw. Flanschbereich mit der Felge verbindende Speichen umfasst. Die zumindest zwei zueinander benachbarten Speichen bilden einen Zwischenraum, den sogenannten Speichenzwischenraum, welcher zumindest teilweise von einem Abdeckelement bedeckt ist. Der Speichenzwischenraum ist bevorzugt im Wesentlichen dreiecksförmig bzw. in Form eines Kreissegments ausgebildet. Zur Optimierung der aerodynamischen Eigenschaften des Rads, ist dabei insbesondere der Teil des Speichenzwischenraums von dem Abdeckelement abgedeckt, welcher möglichst geringfügig von der Felge des Rads beabstandet ist.

Des Weiteren ist es bevorzugt, dass der zumindest eine Speichenzwischenraum, welcher von dem Abdeckelement zumindest teilweise bedeckt ist, konisch bzw. trichterförmig vom Radäußeren in Richtung des Radinneren verläuft. Mit anderen Worten, wird der Speichenzwischenraum bevorzugt zur Radinnenseite hin enger bzw. kleiner.

Unter Radinnenseite und Radaußenseite wird im Sinne dieser Erfindung auf die Lage des Rads im eingebauten Zustand im Fahrzeug referenziert. Dabei ist eine Seite des Rades, nämlich die Radinnenseite, dem Fahrzeug zugewandt, während die andere Seite des Rades, nämlich die Radaußenseite, dem Fahrzeug abgewandt und für außenstehende sichtbar ist. An der Radinnenseite, insbesondere an dem Nabenabschnitt bzw. an dem Radflansch wird üblicherweise eine Bremsscheibe oder Teile der Radaufhängung angeflanscht bzw. angebunden.

Das Abdeckelement ist dabei von der Radaußenseite bzw. vom Radäußeren, also im eingebauten Zustand des Rads von außen an Rad montiert und an der Radaußenseite angeordnet. Das Abdeckelement ist also an der Radaußenseite angebunden bzw. von außen an das Rad montiert.

Weiterhin ist es vorgesehen, dass das Abdeckelement von einer Befestigungsvorrichtung in der eingebauten Position gehalten ist. Die Befestigungsvorrichtung ist dabei an der Radinnenseite, nämlich an dem Radflansch angeordnet. Die Befestigungsvorrichtung ist also an der Radinnenseite angebunden bzw. ist von innen an das Rad montiert ist.

Besonders bevorzugt ist die Befestigungsvorrichtung dabei flächig an dem Radflansch angeordnet. Der Radflansch kann beispielsweise der innere Teil des Nabenabschnitts darstellen und ist weiter bevorzugt selbst eben bzw. flächig mit einer kreisrunden ebenen Oberfläche ausgebildet. An eine solche beispielhaft ebene Oberfläche bzw. kann dann die Befestigungsvorrichtung eben aufliegen.

Weiterhin ist es vorgesehen, dass die Befestigungsvorrichtung zumindest ein Flügelelement umfasst, welches vom Radinneren zumindest einen Speichenzwischenraum zumindest teilweise überdeckt. Besonders bevorzugt ragt das Flügelelement dabei vom Radinneren her kommend in den Speichenzwischenraum hinein, sodass an diesem das Abdeckelement vom Radäußeren befestigt werden kann. Dabei kann die Befestigungsvorrichtung beispielsweise sternförmig ausgebildet sein, wobei ein kreisrundes oder ringförmiges Element am Radflansch eben bzw. flächig aufliegt, während zumindest ein (bevorzugt mehrere) Flügelelement in die Speichenzwischenräume hineinragen.

Weiter ist es bevorzugt, dass mehrere Abdeckelemente mit der Befestigungsvorrichtung in der eingebauten Position der Abdeckelemente am Radäußeren gehalten werden.

Es ist bevorzugt vorgesehen, dass das eine einstückige Befestigungsvorrichtung eine Befestigungsvorrichtung für mehrere Abdeckelemente darstellt, welche jeweils einen Speichenzwischenraum zumindest teilweise abdecken.

Eine derartige Befestigungsvorrichtung des Abdeckelements ist insbesondere deswegen vorteilhaft, da hierdurch eine einfache montier- und demontierbare Befestigung des Abdeckelements bei gleichzeitig hoher Verlustsicherheit gewährleistet werden kann. Ist es aus allen möglichen denkbaren Gründen, beispielsweise bei Beschädigung des Abdeckelements oder falls das Abdeckelement gar nicht mehr benötigt wird, notwendig dieses auszuwechseln oder abzunehmen, so gewährleistet das erfindungsgemäße Abdeckelement eine einfache Demontage. Durch die Befestigungsvorrichtung ist es möglich, das Abdeckelement nicht direkt an das Rad anzubinden und somit keine Varianten oder besondere Radgestaltungen berücksichtigt werden müssen.

Die Befestigungsvorrichtung selbst ist dabei weiter bevorzugt mit dem Radflansch verbunden.

Diese Verbindung kann beispielswiese formschlüssig, also zum Beispiel durch Einlegen der Befestigungsvorrichtung in bereits vorhandene Verschraubungslöcher des Radflansches, erfolgen. Alternativ oder zusätzlich kann die Befestigungsvorrichtung auch durch einen Kraftschluss bzw. einen Stoffschluss mit dem Radflansch verbunden sein.

So ist es besonders bevorzugt vorgesehen, dass die Befestigungsvorrichtung neben dem genannten Formschluss, durch Anbringung eines mit dem Radflansch verbundenen Bauteils gehalten ist. Dabei kann die Befestigungsvorrichtung beispielsweise zwischen den Radflansch und das mit dem Radflansch verbundene Bauteil gehalten bzw. eingepresst sein.

Der Formschluss stellt dabei in der Montage eine Art Vorpositionierung da, während die eigentliche Anbindung des mit dem Radflansch verbundenen Bauteils die Befestigung der Befestigungsvorrichtung darstellt.

Besonders bevorzugt ist das Abdeckelement formschlüssig und/oder kraftschlüssig und/oder stoffschlüssig mit dem Flügelelement verbunden. Beispielsweise können das Flügelelement und das Abdeckelement überlappend aufeinander liegen oder aneinander angrenzen und dabei einen Formschluss bilden. Es ist alternativ oder zusätzlich möglich, dass das Abdeckelement mit dem Flügelelement verschraubt oder mittels einer ClipVerbindung verbunden ist.

Um einen möglichst sicheren Halt des Abdeckelements innerhalb des Speichenzwischenraums bzw. an dem Speichenzwischenraum zu gewährleisten, ist es weiterhin bevorzugt, dass die Befestigungsvorrichtung im direkten Kontakt mit dem Nabenabschnitt bzw. mit dem Flanschbereich bzw. dem Radflansch des Rads an der Radinnenseite steht. Dabei kann beispielsweise die Befestigungsvorrichtung selbst am Nabenabschnitt bzw. am Flansch gehalten sein. Wie bereits genannt, kann dies zum einen durch eine formschlüssige bzw. kraftschlüssige bzw. stoffschlüssige Verbindung des inneren Abdeckelementteils mit dem Radflansch realisiert werden, zum anderen ist es jedoch auch möglich, dass die Befestigungsvorrichtung flächig zwischen dem Radflansch und einem mit dem Radflansch verbundenen Bauteil gehalten bzw. eingeklemmt ist. Ein solches mit dem Radflansch verbundene Bauteil kann beispielsweise eine Bremsscheibe oder ein Teil einer Radaufhängung darstellen, welche üblicherweise durch zumindest eine Schraubverbindung mit dem Nabenabschnitt bzw. dem Radflansch des Rads verbunden ist. So kann beispielsweise die Befestigungsvorrichtung flächig zwischen dem mit Radflansch verbundenen Bauteil (also z.B. der Bremsscheibe) und dem Radflansch selbst geklemmt sein bzw. gehalten werden.

In einer weiteren bevorzugten Ausführung der Erfindung ist es vorgesehen, dass die Befestigungsvorrichtung bzw. zumindest ein Flügelelement an der Radinnenseite gehalten wird und durch den Speichenzwischenraum an die Radaußenseite hindurchragt. Dabei wird der Bereich des Flügelelements, welcher an die Radaußenseite hinausragt, bevorzugt an den Speichen bzw. an der Felge des Rads gehalten bzw. befestigt.

In einer nächsten vorteilhaften Ausbildung der Erfindung ist es vorgesehen, dass das Abdeckelement formschlüssig mit zumindest einer Speiche und/oder mit der Felge verbunden ist. Beispielsweise können die Abdeckelemente oder eines dieser durch Einhakverbindungen an den Speichenkanten eingehakt sein. So kann ein fester Sitz des Abdeckelements sichergestellt werden.

Weiterhin ist es in diesem Zusammenhang möglich, dass das Abdeckelement in eine Kante eines Hinterschnitts der Felge bzw. in den Hinterschnitt selbst eingehakt bzw. eingeclipst sein kann. Ein solcher Hinterschnitt kann beispielsweise an der Felge des Rads angeordnet sein und über den gesamten Umfang des Rads bzw. der Felge verlaufen. Es ist auch möglich, dass das Flügelelement der Befestigungsvorrichtung an der Speiche bzw. der Felge gehalten wird bzw. formschlüssig mit dieser verbunden ist.

Für jede zusätzliche Verbindung des Abdeckelements, insbesondere für Einhakverbindungen, kann das Abdeckelement eine Vorrichtung bzw. Geometrie umfassen, welche eine derartige Einhak- oder Clipverbindung ermöglicht.

Das Abdeckelement selbst, ist bevorzugt zumindest teilweise aus einem Kunststoff gebildet. Beispielsweise kann dieses aus einem Kunststoff-Metall-Schichtverbund gebildet sein, bei welchem die Metallschicht im eingebauten Zustand des Abdeckelements in Richtung Radaußen und die Kunststoffschicht in Richtung Radinnen bzw. in Fahrzeugrichtung angeordnet ist.

Es ist weiterhin möglich, dass das Abdeckelement zumindest teilweise aus einem flexiblen Material ausgebildet ist. Beispielsweise kann bei einer oben beschriebenen Ausführung einer Befestigungsvorrichtung, welche durch den Speichenzwischenraum hindurchragt an das Radäußere, zumindest die Flügelelemente der Befestigungsvorrichtung aus einem flexiblen Kunststoffmaterial ausgebildet sein. Dies ermöglicht ein einfaches Einbringen bzw. Durchstecken der Flügelelemente durch den Speichenzwischenraum an das Radäußere.

Es wird weiterhin ein Verfahren zur Montage eines Rads eines Fahrzeuges, welches nach einem der Ansprüche 1 bis 10 ausgebildet ist, vorgeschlagen. Das Abdeckelement wird dabei so an das Rad bzw. in bzw. an den Speichenzwischenraum befestigt, indem die Befestigungsvorrichtung von Innen am Radinneren angeordnet wird und das Abdeckelement vom Radäußeren mit der Befestigungsvorrichtung an dem Speichenzwischenraum angeordnet ist.

Diese und weitere Merkmale gehen außer aus den Ansprüchen und aus der Beschreibung auch aus den Zeichnungen hervor, wobei die einzelnen Merkmale jeweils für sich alleine oder zu mehreren in Form von Unterkombinationen bei einer Ausführungsform der Erfindung verwirklicht sein und vorteilhafte sowie für sich genommen schutzfähige Ausführungen darstellen können, für die hier Schutz beansprucht wird.

Im Folgenden wird die Erfindung anhand von vier Ausführungsbeispielen weiter erläutert. Erfindungswesentlich können dabei sämtliche näher beschriebenen Merkmale sein.
**Figur 1** zeigt einen Teil eines Rads eines Fahrzeuges in einer Vorderansicht bzw. einer Außenansicht mit beispielhaften Abdeckelementen.
**Figur 2** zeigt das Rad aus Figur 3 von einer Hinteransicht bzw. einer Innenansicht.
**Figur 3** zeigt ein weiteres Ausführungsbeispiel eines erfindungsgemäßen Rads eines Fahrzeuges in einer Vorderansicht.
**Figur 4** zeigt das Rad aus Figur 5 in einer Hinteransicht bzw. einer Innenansicht.
In **Figur 5** ist eine Schnittansicht des Rades aus Figur 3 und Figur 4 aufgezeigt.

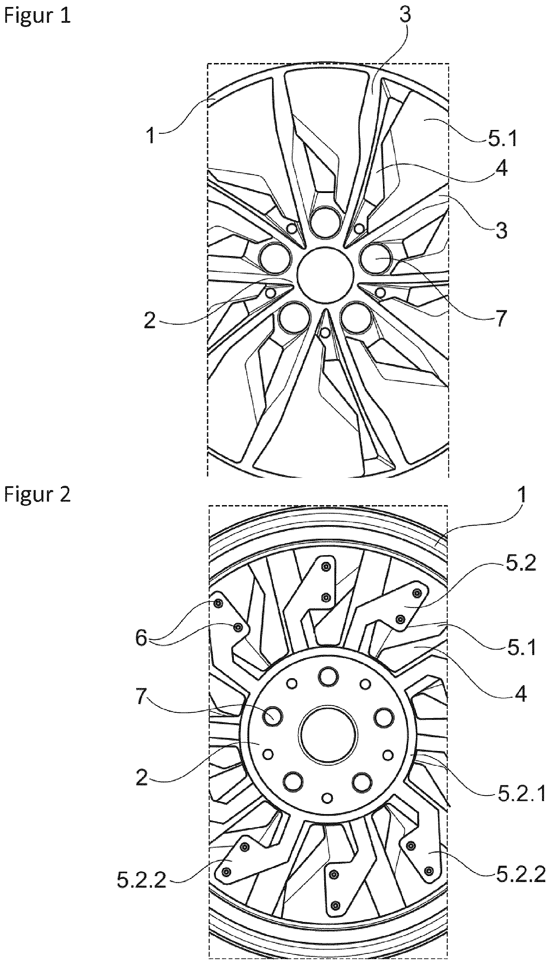

**Figur 1** zeigt einen Teil eines Rads eines Fahrzeuges in einer dreidimensionalen Ansicht vom Radäußeren A betrachtet. Das Rad umfasst eine Felge 1, einen Nabenabschnitt 2 sowie mehrere den Nabenabschnitt 2 mit der Felge 1 verbindende Speichen 3. Die jeweils zueinander benachbarten Speichen 3 bilden dabei einen Speichenzwischenraum 4. Zumindest einer dieser Speichenzwischenräume 4 ist von einem Abdeckelement 5.1 zumindest teilweise bedeckt. Das Abdeckelement 5.1. Das Abdeckelement 5.1 wird dabei vom Radäußeren A bzw. von der Radaußenseite A an das Rad montiert.

Das Abdeckelement 5.1 wird dabei von einer Befestigungsvorrichtung 5.2 in der eingebauten Position am Rad gehalten. Die Befestigungsvorrichtung 5.2 ist, wie in **Figur 2** in einer Ansicht des Rads von der Radinnenseite aufgezeigt, an der Radinnenseite montiert und mit dem inneren Nabenabschnitt (2), dem sogenannten Radflansch verbunden.

Das Radäußere bzw. die Radaußenseite beschreibt dabei die Seite des eingebauten Rades, welche von außen bei Sicht auf das Fahrzeug ersichtlich ist, während das Radinnere bzw. die Radinnenseite die Seite des Rads darstellt, welche im eingebauten Zustand des Rads in Richtung eines Fahrzeugaufbaus gerichtet ist. So ist in Figur 1 das Radäußere bzw. die Radaußenseite und in Figur 2 die Radinnenseite zu erkennen.

Dabei ist in **Figur 1** ein Rad eines Fahrzeuges von einer Außenansicht (also das Radäußere) zu erkennen, während in **Figur 2** das gleiche Rad von einer Innenansicht (also von der Radinnenseite) zu erkennen ist. In diesem konkreten Beispiel ist jeder Speichenzwischenraum 4 des Rads mit einem Abdeckelement 5.1 zumindest teilweise bedeckt.

Wie in **Figur 2** zu erkennen, liegt die Befestigungsvorrichtung 5.2, in diesem Falle in Form eines Ringes 5.2.1, flächig am (inneren) Nabenabschnitt bzw. am Radflansch 2 an bzw. auf. Von dem Ring 5.2.1 zweigen jeweils entlang jeder Speiche 3 zumindest annähernd flächige Flügelelemente 5.2.2 ab, welche die Speichenzwischenräume 4 vom Radinneren herkommend bzw. an der Radinnenseite zumindest teilweise bedecken.

Vom Radäußeren bzw. der Radaußenseite in **Figur 1** betrachtet, sind die Abdeckelemente 5.1 in jedem Speichenzwischenraum 4 zu erkennen. Die Abdeckelemente 5.1 können anschließend an die Montage der Befestigungsvorrichtung 5.2 durch geeignete Verbindung mit den jeweiligen flächigen Flügelelementen 5.2.2 der Befestigungsvorrichtung 5.2 an der Radaußenseite die Speichenzwischenräume 4 (zumindest teilweise) bedecken. In diesem konkreten Beispiel ist die Verbindung des Abdeckelements 5.1 mit der Befestigungsvorrichtung 5.2 in Form einer Schraubverbindung 6 realisiert.

Alternativ zu einer solchen Schraubverbindung 6 sind jedoch auch andere Verbindungsformen, beispielsweise ein Formschluss oder ein Stoffschluss denkbar. Insbesondere bei einer gewünschten einfachen Lösbarkeit der Verbindung zwischen dem Abdeckelement 5.1 und der Befestigungsvorrichtung 5.2 und damit zur einfachen Demontage des Abdeckelements 5.1, bietet sich eine formschlüssige Verbindung an.

Bei der Montage des Rads aus **Figur 1** und **Figur 2** ist als erster Schritt das die Befestigungsvorrichtung 5.2 flächig an den inneren Nabenabschnitt bzw. dem Radflansch 2 anzulegen bzw. vorzupositionieren. Wie in **Figur 2** zu erkennen, ist es vorgesehen an dem inneren Nabenabschnitt 2 des Rads bzw. dem Radflansch 2 ein weiteres Bauteil (insbesondere eine Bremsscheibe) möglichst flächig mittels geeigneten Verschraubungen 7 zu befestigen. Durch anschließend an die Vorpositionierung der Befestigungsvorrichtung 5.2 am Nabenabschnitt 2 erfolgende flächige Befestigung dieses weiteren Bauteils, wird der Ring 5.2.1 der Befestigungsvorrichtung 5.2 zwischen dem Bauteil und dem Nabenabschnitt 2 eingeklemmt und damit fest am Rad gehalten.

Anschließend an diesen Montageschritt können die Abdeckelemente 5.1 einzeln an den gewünschten Speichenzwischenräumen 4 bzw. an den flächigen Flügelelementen 5.2.2 der Befestigungsvorrichtung 5.2 von außen angebracht werden. Da die flächigen Flügelelemente 5.2.2 in Radialrichtung des Rads betrachtet, versetzt zu der äußersten (Kreis-)Ebene des Rads sind, ist es vorgesehen, dass das Abdeckelement 5.1 derart geometrisch geformt ist, dass dieses einen Vorsprung oder Absatz aufweist um geeignet mit Befestigungsvorrichtung 5.2 verbunden zu werden.

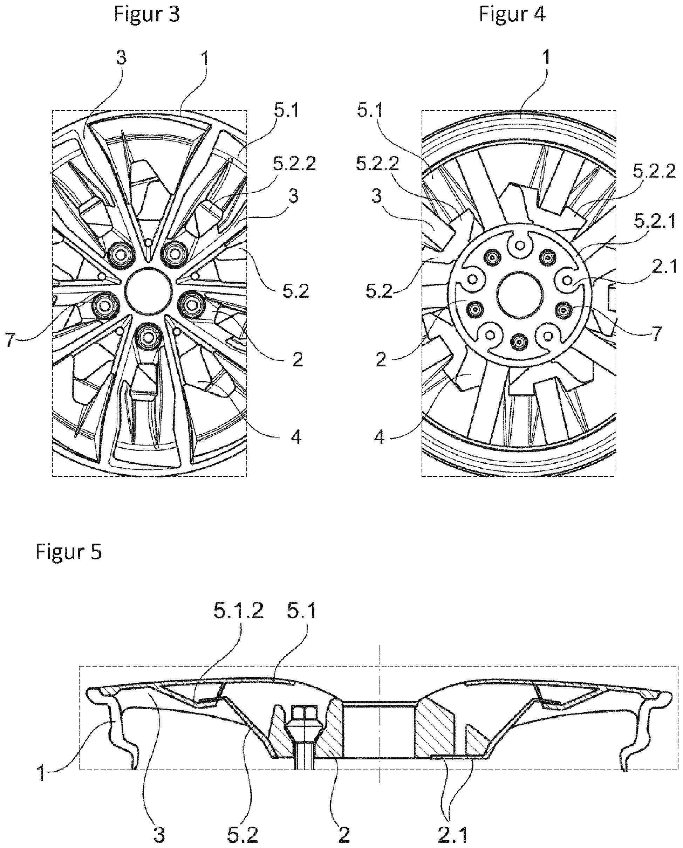

In **Figur 3, Figur 4** und **Figur 5** ist ein weiteres Ausführungsbeispiel eines erfindungsgemäßen Rads eines Fahrzeuges aufgezeigt. Wie bei dem Ausführungsbeispiel aus Figur 1 und Figur 2 sind auch hier alle Speichenzwischenräume 4 des Rads zumindest teilweise von einem Abdeckelement 5.1 bedeckt. In Figur 3 ist das Rad bzw. ein Ausschnitt des Rads von der Radaußenseite zu erkennen, während Figur 4 das Rad von der Radinnenseite zeigt.

Wie in **Figur 4** zu erkennen, ist die Befestigungsvorrichtung 5.2 wieder ringförmig 5.2.1 an dem Nabenabschnitt 2 bzw. dem Radflansch aufgelegt, wobei (zumindest annähernd) flächige Flügelelemente 5.2.2 von diesem Ring 5.2.1 zu den jeweiligen Speichenzwischenräumen 4 abzweigen. Im Unterschied zu dem Beispiel aus Figur 1 und 2 überlappen die flächigen Flügelelemente 5.2.2 jeweils über eine Speiche 3 und überdecken dann jeweils zwei Speichenzwischenräume 4. Ebenfalls im Unterschied zum vorherigen Ausführungsbeispiel, ist die Befestigungsvorrichtung 5.2 formschlüssig mit den jeweiligen Abdeckelement 5.1 verbunden. Die Befestigungsvorrichtung 5.2 ist in diesem Fall, wie in Figur 3 zu erkennen, von der Radaußenansicht bzw. von der Radaußenseite sichtbar.

Die formschlüssige Verbindung zwischen dem Abdeckelement 5.1 und der Befestigungsvorrichtung 5.2 ist detaillierter und beispielhaft in einer Schnittansicht durch das Rad in **Figur 5** aufgezeigt. Dabei ist die Befestigungsvorrichtung 5.2 in eine Aufnahme 5.1.2 des Abdeckelements 5.1 eingeschoben. Weiterhin ist ebenfalls aus **Figur 5** und **Figur 4** zu erkennen, dass der am Nabenabschnitt 2 anliegende Ring 5.2.1 der Befestigungsvorrichtung 5.2 zusätzlich in Aussparungen 2.1 bzw. Sacklöcher an der inneren Nabenfläche 2 angeordnet ist. Somit kann ein zusätzlicher Formschluss zwischen der Befestigungsvorrichtung 5.2 und dem Nabenabschnitt 2 realisiert werden.

Die Montagereihenfolge zur Montage des Rads aus Figur 3, 4 und 5 ist unverändert zu der bereits beschriebenen des Rads aus Figur 1 und 2.

### Bezugszeichenliste-

- 1: Felge
- 1.1: Hinterschnitt
- 2: Nabenabschnitt bzw. Radflansch
- 2.1: Aussparung
- 3: Speiche
- 4: Speichenzwischenraum
- 5: Abdeckelement
- 5.1: Abdeckelement
- 5.1.1: Nut
- 5.1.2: Aufnahme
- 5.2: Befestigungsvorrichtung
- 5.2.1: Ring
- 5.2.2: Flächige Flügelelement
- 6: Schraubverbindung
- 7: Verschraubungen
- 8: Formschluss
- A: Radäußere
- I: Radinnere

## Patentansprüche

1. Rad eines Fahrzeuges umfassend eine Felge (1), einen Nabenabschnitt (2) sowie zumindest zwei den Nabenabschnitt (2) mit der Felge (1) verbindende Speichen (3), wobei mindestens ein Speichenzwischenraum (4) zwischen den Speichen (3) zumindest teilweise von einem vom, im eingebauten Zustand des Rads im Fahrzeug betrachtet, Radäußeren an das Rad montierte Abdeckelement (5.1) bedeckt ist, wobei das Abdeckelement (5.1) von einer Befestigungsvorrichtung (5.2) in der eingebauten Position des Abdeckelements (5.1) gehalten ist, die Befestigungsvorrichtung (5.2) vom, im eingebauten Zustand des Rads im Fahrzeug betrachtet, Radinneren montiert ist und mit einem im Radinneren angeordneten Radflansch verbunden ist,
**dadurch gekennzeichnet, dass**
zumindest ein Flügelelement (5.2.2) der Befestigungsvorrichtung (5.2) vom Radinneren zumindest einen Speichenzwischenraum (4) zumindest teilweise überdeckt.

2. Rad nach Anspruch 1, wobei mehrere Abdeckelemente (5.1) mit der Befestigungsvorrichtung (5.2) in der eingebauten Position der Abdeckelemente am Radäußeren gehalten sind.

3. Rad nach einem der vorangegangenen Ansprüche, wobei die Befestigungsvorrichtung (5.2) formschlüssig und/oder kraftschlüssig und/oder stoffschlüssig mit dem Radflansch verbunden ist.

4. Rad nach Anspruch 3, wobei die Befestigungsvorrichtung (5.2) am Radflansch aufliegt und zwischen dem Radflansch und einem mit dem Radflansch verbundenen Bauteil gehalten ist.

5. Rad nach einem der vorhergehenden Ansprüche, wobei das Flügelelement (5.2.2) der Befestigungsvorrichtung (5.2) vom Radinneren in zumindest einen Speichenzwischenraum (4) hineinragt.

6. Rad nach einem der vorangegangenen Ansprüche, wobei das Flügelelement (5.2.2) mit dem Abdeckelement (5.1) kraftschlüssig und/oder formschlüssig und/oder stoffschlüssig verbunden ist.

7. Rad nach einem der vorangegangenen Ansprüche, wobei das Abdeckelement (5.1) formschlüssig mit zumindest einer Speiche (3) und/oder mit der Felge (1) verbunden ist.

8. Rad eines Fahrzeuges nach einem der vorangegangenen Ansprüche, wobei die Felge (1) einen in Umfangsrichtung des Rads verlaufenden Hinterschnitt (1.1) aufweist, an welchem Hinterschnitt (1.1) das Abdeckelement (5.1) angebunden ist.

9. Rad eines Fahrzeuges nach einem der vorangegangenen Ansprüche, wobei zumindest ein Teil des Abdeckelements (5.1) und/oder der Befestigungsvorrichtung (5.2) aus einem Kunststoff und/oder aus einem flexiblen Material gebildet ist.

10. Verfahren zur Montage eines Rads eines Fahrzeuges, welches nach einem der vorangegangenen Ansprüche 1 bis 10 ausgebildet ist, wobei in einem ersten Schritt die Befestigungsvorrichtung (5.2) flächig an dem an der Innenseite des Rads angeordneten Radflansch vorpositioniert wird und in einem zweiten Schritt die Befestigungsvorrichtung (5.2) zwischen dem mit dem Radflansch verbundene Bauteil und dem Radflansch gehalten wird.

11. Verfahren nach Anspruch 10, wobei das Abdeckelement (5.1) von der Radaußenseite (A) mit der Befestigungsvorrichtung (5.2) verbunden wird.

## Claims

1. Wheel of a vehicle, comprising a rim (1), a hub portion (2), and at least two spokes (3) that connect the hub portion (2) to the rim (1), wherein at least one spoke intermediate space (4) between the spokes (3) is at least partially covered by a covering element (5.1) mounted on the wheel from the outside of the wheel, as seen in the installed state of the wheel in the vehicle, wherein the covering element (5.1) is held in the installed position of the covering element (5.1) by a fastening device (5.2), the fastening device (5.2) is mounted from the inside of the wheel, as seen in the installed state of the wheel in the vehicle, and is connected to a wheel flange arranged on the inside of the wheel,
**characterized in that**
at least one wing element (5.2.2) of the fastening device (5.2) at least partially overlaps at least one spoke intermediate space (4) from the inside of the wheel.

2. Wheel according to Claim 1, wherein a plurality of covering elements (5.1) are held in the installed position of the covering elements on the outside of the wheel by the fastening device (5.2).

3. Wheel according to either of the preceding claims, wherein the fastening device (5.2) is connected to the wheel flange in a form-fitting and/or force-fitting and/or materially bonded manner.

4. Wheel according to Claim 3, wherein the fastening device (5.2) rests on the wheel flange and is held between the wheel flange and a component connected to the wheel flange.

5. Wheel according to one of the preceding claims, wherein the wing element (5.2.2) of the fastening device (5.2) projects into at least one spoke intermediate space (4) from the inside of the wheel.

6. Wheel according to one of the preceding claims, wherein the wing element (5.2.2) is connected to the covering element (5.1) in a force-fitting and/or form-fitting and/or materially bonded manner.

7. Wheel according to one of the preceding claims, wherein the covering element (5.1) is connected to at least one spoke (3) and/or to the rim (1) in a form-fitting manner.

8. Wheel of a vehicle according to one of the preceding claims, wherein the rim (1) has an undercut (1.1) extending in the circumferential direction of the wheel, to which undercut (1.1) the covering element (5.1) is attached.

9. Wheel of a vehicle according to one of the preceding claims, wherein at least a part of the covering element (5.1) and/or of the fastening device (5.2) is made of a plastic and/or of a flexible material.

10. Method for mounting a wheel of a vehicle, which wheel is configured according to one of the preceding Claims 1 to 10, wherein, in a first step, the fastening device (5.2) is prepositioned flat against the wheel flange arranged on the inner side of the wheel, and, in a second step, the fastening device (5.2) is held between the component connected to the wheel flange and the wheel flange.

11. Method according to Claim 10, wherein the covering element (5.1) is connected to the fastening device (5.2) from the outside (A) of the wheel.

## Revendications

1. Roue d'un véhicule comprenant une jante (1), une section de moyeu (2) et au moins deux rayons (3) reliant la section de moyeu (2) à la jante (1), au moins un espace intermédiaire de rayon (4) entre les rayons (3) étant au moins partiellement couvert par un élément de couverture (5.1) monté sur la roue depuis l'extérieur de la roue, vu dans l'état monté de la roue dans le véhicule, l'élément de recouvrement (5.1) étant maintenu par un dispositif de fixation (5.2) dans la position montée de l'élément de recouvrement (5.1), le dispositif de fixation (5.2) étant monté depuis l'intérieur de la roue, vu dans l'état monté de la roue dans le véhicule, et étant relié à un flasque de roue agencé à l'intérieur de la roue,
**caractérisée en ce que**
au moins un élément d'aile (5.2.2) du dispositif de fixation (5.2) recouvre au moins partiellement de l'intérieur de la roue au moins un espace intermédiaire de rayon (4).

2. Roue selon la revendication 1, dans laquelle plusieurs éléments de recouvrement (5.1) sont maintenus avec le dispositif de fixation (5.2) dans la position montée des éléments de recouvrement sur l'extérieur de la roue.

3. Roue selon l'une quelconque des revendications précédentes, dans laquelle le dispositif de fixation (5.2) est relié au flasque de roue par une liaison par complémentarité de forme et/ou à force et/ou par liaison de matière.

4. Roue selon la revendication 3, dans laquelle le dispositif de fixation (5.2) repose sur le flasque de roue et est maintenu entre le flasque de roue et un composant relié au flasque de roue.

5. Roue selon l'une quelconque des revendications précédentes, dans laquelle l'élément d'aile (5.2.2) du dispositif de fixation (5.2) fait saillie depuis l'intérieur de la roue dans au moins un espace intermédiaire de rayon (4).

6. Roue selon l'une quelconque des revendications précédentes, dans laquelle l'élément d'aile (5.2.2) est relié à l'élément de recouvrement (5.1) à force et/ou par complémentarité de forme et/ou par liaison de matière.

7. Roue selon l'une quelconque des revendications précédentes, dans laquelle l'élément de recouvrement (5.1) est relié par complémentarité de forme à au moins un rayon (3) et/ou à la jante (1).

8. Roue d'un véhicule selon l'une quelconque des revendications précédentes, dans laquelle la jante (1) présente une contre-dépouille (1.1) s'étendant dans la direction circonférentielle de la roue, contre laquelle contre-dépouille (1.1) l'élément de recouvrement (5.1) est attaché.

9. Roue d'un véhicule selon l'une quelconque des revendications précédentes, dans laquelle au moins une partie de l'élément de recouvrement (5.1) et/ou du dispositif de fixation (5.2) est formée d'une matière plastique et/ou d'un matériau flexible.

10. Procédé de montage d'une roue d'un véhicule, qui est réalisé selon l'une quelconque des revendications 1 à 10 précédentes, dans lequel, dans une première étape, le dispositif de fixation (5.2) est prépositionné à plat sur le flasque de roue agencé sur le côté intérieur de la roue et, dans une deuxième étape, le dispositif de fixation (5.2) est maintenu entre le composant relié au flasque de roue et le flasque de roue.

11. Procédé selon la revendication 10, dans lequel l'élément de recouvrement (5.1) est relié au dispositif de fixation (5.2) par le côté extérieur de la roue (A).
